# EUROPÄISCHE PATENTANMELDUNG

(11) **EP 4 020 035 A1**
(43) Veröffentlichungstag der Anmeldung: **29.06.2022**
(21) Anmeldenummer: 21215838.0
(22) Anmeldetag: 20.12.2021
(51) Int. Cl.: G02B 6/38, G02B 6/42, F21V 8/00, F21V 23/06

(54) **STECKBUCHSE, STECKVERBINDERSYSTEM, STECKBUCHSENKIT UND VERFAHREN ZUR HERSTELLUNG EINER STECKBUCHSE MIT EINEM STECKBUCHSENKIT**

(30) Priorität: 23.12.2020 DE 102020134892
(71) Anmelder: Reichle & De-Massari AG, 8620 Wetzikon (CH)
(72) Erfinder: Gerber, Matthias, 8630 Rüti ZH (CH); Hofer, Bernhard, 8307 Effretikon (CH); Zurkirchen, Marco, 8608 Bubikon (CH)
(74) Vertreter: Daub, Thomas

(57) **Zusammenfassung**

Die Erfindung geht aus von einer Steckbuchse (10a), insbesondere Single-Pair-Ethernet-Steckbuchse, mit einer Steckbuchseneinheit (12a), welche an einer Vorderseite (14a) zumindest eine Steckeröffnung (16a) zur Aufnahme einer korrespondieren-den Steckereinheit (18a) entlang einer Steckrichtung (20a) aufweist. Es wird vorgeschlagen, dass die Steckbuchse (10) eine Lichtwellenleitereinheit (22a) mit zumindest einem Lichtwellenleiter (24a) aufweist, welcher sich von einer Rückseite (26a) und/oder einer Unterseite (28a) der Steckbuchseneinheit (12a) zu der Vorderseite (14a) erstreckt.

## Beschreibung

### Stand der Technik

Die Erfindung betrifft eine Steckbuchse nach dem Oberbegriff des Anspruchs 1, ein Steckverbindersystem nach Anspruch 13, ein Steckbuchsenkit nach Anspruch 14 und ein Verfahren zur Herstellung einer Steckbuchse mit einem Steckbuchsenkit nach Anspruch 15.

Aus dem Stand der Technik sind bereits Steckbuchsen bekannt, welche eine Steckbuchseneinheit aufweisen, die an einer Vorderseite eine Steckeröffnung zur Aufnahme einer korrespondierenden Steckereinheit eines Steckers aufweisen. Einige bekannte Steckbuchsen weisen an ihrer Vorderseite fest integrierte Signalausgabeelemente, beispielsweise farbige LEDs oder dergleichen auf, welche dazu vorgesehen sind, optische Signale, beispielsweise zur Anzeige eines Betriebszustands, auszugeben. Nachteilig an derartigen Lösungen ist, dass hierfür zusätzliche Anschlüsse benötigt werden, welche, neben den Signal- und Schirmkontakten der Steckbuchseneinheit, in die Steckbuchse integriert und zu einer Leiterplatte, mit welcher die Steckbuchse verbunden ist, geführt werden müssen. Fest integrierte Signalausgabeelemente können zudem nur schwer individuell an veränderte Anforderungen von Anwendern angepasst und im Falle eines Defekts nur schwer ausgetauscht werden.

Die Aufgabe der Erfindung besteht insbesondere darin, eine gattungsgemäße Steckbuchse mit vorteilhaften Eigenschaften hinsichtlich einer Flexibilität bereitzustellen. Die Aufgabe wird erfindungsgemäß durch die Merkmale der Ansprüche 1, 13, 14 und 15 gelöst, während vorteilhafte Ausgestaltungen und Weiterbildungen der Erfindung den Unteransprüchen entnommen werden können.

### Vorteile der Erfindung

Die Erfindung geht aus von einer Steckbuchse, insbesondere Single-Pair-Ethernet-Steckbuchse, mit einer Steckbuchseneinheit, welche an einer Vorderseite zumindest eine Steckeröffnung zur Aufnahme einer korrespondierenden Steckereinheit entlang einer Steckrichtung aufweist.

Es wird vorgeschlagen, dass die Steckbuchse eine Lichtwellenleitereinheit aufweist, mit zumindest einem Lichtwellenleiter, welcher sich von einer Rückseite und/oder einer Unterseite der Steckbuchseneinheit zu der Vorderseite erstreckt.

Durch eine derartige Ausgestaltung kann vorteilhaft eine Steckbuchse mit einem hohen Maß an Flexibilität bereitgestellt werden. Mittels der Lichtwellenleitereinheit können optische Signale zur Anzeige zumindest eines Betriebszustands der Steckbuchse vorteilhaft von einer externen Signalquelle, welche auf einer Leiterplatte, mit der die Steckbuchse verbunden ist, angeordnet ist, zu der Vorderseite der Steckbuchseneinheit geleitet werden. Dabei kann vorteilhaft eine Flexibilität gegenüber herkömmlichen Steckbuchsen erhöht werden, beispielsweise indem die externe Signalquelle unabhängig von der Steckbuchse ausgewählt und die jeweiligen Bedürfnisse individuell angepasst werden kann. Zudem kann vorteilhaft eine Anzahl von elektrischen Anschlüssen innerhalb der Steckbuchse reduziert werden, da gegenüber herkömmlichen Steckbuchsen mit integrierten Signalquellen, beispielsweise integrierten LEDs, keine zusätzlichen elektrischen Anschlüsse zur Verbindung der Signalquelle mit einer Leiterplatte integriert werden müssen. Bedingt durch die reduzierte Anzahl von elektrischen Anschlüssen innerhalb der Steckbuchse kann weiterhin vorteilhaft auch eine Anzahl von Durchbrüchen innerhalb der Steckbuchseneinheit reduziert werden. Somit kann vorteilhaft ein Herstellungsprozess der Steckbuchse vereinfacht werden, womit weiter vorteilhaft auch Kosteneinsparungen einhergehen.

Die Steckbuchse kann als eine Simplex-Steckbuchse ausgebildet sein und genau eine Steckeröffnung zur Aufnahme der korrespondierenden Steckereinheit aufweisen. Alternativ kann die Steckbuchse jedoch auch als eine Mehrfach-Steckbuchse, beispielsweise als eine Duplex-Steckbuchse, ausgebildet sein und zumindest eine weitere Steckeröffnung, zur Aufnahme zumindest einer korrespondierenden weiteren Steckereinheit, aufweisen. Vorzugsweise entsprechen die äußeren Abmessungen der Steckbuchse zumindest im Wesentlichen den äußeren Abmessungen einer Simplex- beziehungsweise Duplex-Steckbuchse vom Typ RJ45, wodurch vorteilhaft insbesondere auch ältere Geräte, welche eine Rj45-Steckbuchse aufweisen, mit der Steckbuchse nachgerüstet werden können. Vorzugsweise ist die Steckbuchse zu einer Verbindung mit einer Leiterplatte vorgesehen und weist hierzu eine Anschlusseinheit auf, welche entsprechende Anschlusskontakte zu einer elektrischen Verbindung der Steckbuchseneinheit mit der Leiterplatte umfasst. Lagebezeichnungen der Steckbuchseneinheit wie "Vorderseite", "Rückseite", "Unterseite", "Oberseite" und dergleichen beziehen sich vorliegend jeweils auf einen verbundenen Zustand der Steckbuchse mit der Leiterplatte. In dem verbundenen Zustand ist die Vorderseite eine Seite der Steckbuchseneinheit, welche der Steckrichtung zugewandt ist und welche senkrecht zur Steckrichtung ausgerichtet ist. Die Rückseite ist in dem verbundenen Zustand eine Seite der Steckbuchseneinheit, welche der Steckrichtung abgewandt ist und welche senkrecht zur Steckrichtung ausgerichtet ist. Die Unterseite ist in dem verbundenen Zustand parallel zu der Steckrichtung ausgerichtet und der Leiterplatte zugewandt. Die Oberseite der Steckbuchseneinheit ist in dem verbundenen Zustand parallel zu der Steckrichtung ausgerichtet und der Leiterplatte abgewandt. Vorzugsweise verläuft die Steckrichtung parallel zu einer Haupterstreckungsrichtung der korrespondierenden Steckereinheit. Unter einer "Haupterstreckungsrichtung" eines Objekts soll dabei eine Richtung verstanden werden, welche parallel zu einer längsten Kante eines kleinsten geometrischen Quaders verläuft, welcher das Objekt gerade noch vollständig umschließt.

Die Lichtwellenleitereinheit umfasst zumindest den Lichtwellenleiter und ist in einem Betriebszustand der Steckbuchse vorzugsweise dazu vorgesehen, zumindest ein optisches Signal, insbesondere elektromagnetische Strahlung, insbesondere sichtbares Licht und/oder Infrarot-Strahlung, von einer Signalquelle, beispielsweise einer LED oder dergleichen, zu der Vorderseite der Steckbuchseneinheit zu transportieren. Der Lichtwellenleiter transmittiert, insbesondere transportiert in dem Betriebszustand das optische Signal entlang einer Längserstreckungsrichtung des Lichtwellenleiters, vorzugsweise über Totalreflexionen innerhalb des Lichtwellenleiters. Das optische Signal kann beispielsweise zu einer Anzeige des Betriebszustands und/oder zur Anzeige von Störung und/oder dergleichen vorgesehen sein. Vorzugsweise ist die Signalquelle als eine externe, von der Steckbuchse unabhängige, Einheit ausgebildet, welche gemeinsam mit der Steckbuchse auf derselben Leiterplatte montiert und mit dieser, zu einer Energieversorgung, elektrisch leitend kontaktiert ist. Es wäre auch denkbar, dass die Signalquelle Teil der Steckbuchse und/oder Teil eines die Steckbuchse aufweisenden Steckverbindersystems ist. Beispielsweise könnte die Signalquelle direkt mit dem Lichtwellenleiter verbunden sein. Die Lichtwellenleitereinheit könnte fest mit der Steckbuchseneinheit verbunden sein. Vorzugsweise ist die Lichtwellenleitereinheit lösbar mit der Steckbuchseneinheit verbunden. Die Lichtwellenleitereinheit könnte sich beispielsweise ausgehend von der Unterseite der Steckbuchseneinheit zu der Vorderseite erstrecken. Vorzugsweise erstreckt sich die Lichtwellenleitereinheit von der Unterseite über die Rückseite zu der Vorderseite der Steckbuchseneinheit.

In der vorliegenden Anmeldung dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Es wäre beispielsweise denkbar, dass die Lichtwellenleitereinheit vollständig an einer Außenseite der Steckbuchseneinheit angeordnet und mit dieser form- und kraftschlüssig verbunden ist. In einer vorteilhaften Ausgestaltung wird jedoch vorgeschlagen, dass die Steckbuchseneinheit zumindest eine Durchgangsöffnung zur Aufnahme des Lichtwellenleiters aufweist, welche sich von der Rückseite zu der Vorderseite erstreckt. Hierdurch kann vorteilhaft eine besonders kompakte Steckbuchse bereitgestellt werden. Es kann insbesondere vorteilhaft eine Bauraumeffizienz gesteigert werden. Insbesondere in Anwendungen mit mehreren zueinander benachbart angeordneten Steckbuchsen, beispielsweise in Serverräumen oder dergleichen, kann vorteilhaft ein Bauraum besonders effizient genutzt werden.

Zudem wird vorgeschlagen, dass der Lichtwellenleiter zumindest ein Verbindungselement zur lösbaren Verbindung mit der Steckbuchseneinheit aufweist. Durch eine derartige Ausgestaltung kann vorteilhaft ein einfaches Verbinden und Lösen der Lichtwellenleitereinheit je nach Bedarf ermöglicht werden. Beispielsweise ist denkbar, dass die Lichtwellenleitereinheit für manche Anwendungen der Steckbuchse nicht benötigt wird und in diesen Fällen besonders einfach lösbar ist, beispielsweise um einen Bauraum in Anwendungen mit vielen eng zueinander benachbart angeordneten Steckbuchsen noch effizienter nutzen zu können. Das Verbindungselement könnte beispielsweise zu einer Schraubverbindung und/oder Nut-Feder-Verbindung und/oder einer Passfederverbindung und/oder Steckverbindung und/oder Klettverschlussverbindung und/oder dergleichen vorgesehen und dementsprechend ausgebildet sein. In einer bevorzugten Ausgestaltung wird jedoch vorgeschlagen, dass das Verbindungelement als ein Rastelement ausgebildet ist, welches zu einem Verrasten mit einem, in und/oder an der Durchgangsöffnung angeordneten, Gegenrastelement der Steckbuchseneinheit vorgesehen ist. Hierdurch kann vorteilhaft eine besonders einfache, zuverlässige und werkzeuglos lösbare Verbindung der Lichtwellenleitereinheit mit der Steckbuchseneinheit ermöglicht werden.

Darüber hinaus wird vorgeschlagen, dass der Lichtwellenleiter zumindest einen Umlenkbereich zu einer Umlenkung eines optischen Signals aufweist. Durch eine derartige Ausgestaltung kann vorteilhaft das optische Signal in dem Lichtwellenleiter auch über Kanten hinweg transportiert werden. Der Umlenkbereich kann als eine Biegung des Lichtwellenleiters mit einem, insbesondere konstanten Radius ausgebildet sein. Alternativ oder zusätzlich ist denkbar, dass der Umlenkbereich als eine Winkelfläche innerhalb des Lichtwellenleiters ausgebildet und zu einer Umlenkung des optischen Signals mittels Totalreflexion, insbesondere vergleichbar mit einer Umlenkung von optischen Signalen bei einem Periskop, ausgebildet ist. Zudem könnte der Umlenkungsbereich dazu vorgesehen sein, das optische Signal umzuformen. Beispielsweise könnte der Umlenkungsbereich eine speziell geformte Oberfläche mit in der Oberfläche eingebrachten dreidimensionalen Mustern aufweisen, mittels derer das optische Signal gestreut oder gebündelt wird. Hierdurch kann beispielsweise vorteilhaft eine Intensität des optischen Signals an der Vorderseite der Steckbuchseinheit je nach Bedarf verändert werden.

Zudem wird vorgeschlagen, dass die Lichtwellenleitereinheit zumindest einen weiteren Lichtwellenleiter aufweist. Hierdurch kann eine Flexibilität weiter verbessert werden. Beispielsweise ist denkbar, dass ein erstes optisches Signal, zum Beispiel grünes Licht zur Anzeige eines Betriebszustands, mittels des ersten Lichtwellenleiters zu der Vorderseite der Steckbuchseneinheit geleitet und ein zweites optisches Signal, zum Beispiel rotes Licht zur Anzeige einer Störung, mittels des weiteren Lichtwellenleiters zu der Vorderseite der Steckbuchseneinheit geleitet wird. Der weitere Lichtwellenleiter kann die vorhergehend und nachfolgend beschriebenen Merkmale des Lichtwellenleiters aufweisen und zu diesem zumindest im Wesentlichen identisch ausgebildet sein. Es wäre jedoch auch denkbar, dass der Lichtwellenleiter und der weitere Lichtwellenleiter zumindest teilweise unterschiedliche Merkmale, beispielsweise zueinander verschieden ausgebildete Umlenkbereiche und/oder Verbindungselemente und/oder dergleichen, aufweisen.

Ferner wird vorgeschlagen, dass die Lichtwellenleitereinheit zumindest einen Verbindungsteg aufweist, welcher den Lichtwellenleiter mit dem weiteren Lichtwellenleiter verbindet. Hierdurch kann vorteilhaft eine Stabilität der Lichtwellenleitereinheit verbessert werden. Zudem kann vorteilhaft eine Montage vereinfacht werden, indem der Lichtwellenleiter und der weitere Lichtwellenleiter gleichzeitig in die jeweils zugehörigen Durchgangsöffnungen eingeführt werden können.

In einem weiteren Aspekt der Erfindung, welcher insbesondere sowohl eigenständig als auch in Kombination mit den übrigen Aspekten der Erfindung betrachtet werden kann, wird vorgeschlagen, dass die Steckbuchse eine Steckbuchsenabschirmeinheit aufweist, wobei die Steckbuchseneinheit eine Steckbuchsenteileinheit mit der Steckeröffnung und eine weitere Steckbuchsenteileinheit mit zumindest einer weiteren Steckeröffnung zur Aufnahme einer korrespondierenden weiteren Steckereinheit entlang einer weiteren Steckrichtung aufweist, wobei die Steckbuchsenabschirmeinheit ein Innenabschirmelement aufweist, welches zwischen der Steckbuchsenteileinheit und der weiteren Steckbuchsenteileinheit angeordnet ist. Wenn die Steckbuchsenabschirmeinheit ein Innenabschirmelement aufweist, welches zwischen der Steckbuchsenteileinheit und der weiteren Steckbuchsenteileinheit angeordnet ist, kann vorteilhaft ein Übersprechen zwischen einem Leiterpaar einer in der Steckeröffnung eingesteckten Steckereinheit und einem weiteren Leiterpaar einer in der weiteren Steckeröffnung eingesteckten weiteren Steckereinheit reduziert, vorzugsweise minimiert werden. Zugleich kann vorteilhaft eine besonders kompakte Steckbuchse mit einer Steckeröffnung und einer weiteren Steckeröffnung, insbesondere eine Duplex-Steckbuchse, mit vorteilhaften Eigenschaften hinsichtlich eines Übersprechverhaltens bereitgestellt werden.

Die Steckbuchsenteileinheit könnte separat von der weiteren Steckbuchsenteileinheit ausgebildet sein. In einer vorteilhaften Ausgestaltung wird jedoch vorgeschlagen, dass die Steckbuchsenteileinheit einstückig mit der weiteren Steckbuchsenteileinheit ausgebildet ist. Hierdurch kann vorteilhaft eine Herstellung der Steckbuchseneinheit vereinfacht werden. Zudem kann vorteilhaft eine besonders kompakte Duplex-Steckbuchse bereitgestellt werden. Unter "einstückig" soll zumindest stoffschlüssig verbunden, wie beispielsweise durch einen Lötprozess, und besonders vorteilhaft in einem Stück geformt verstanden werden.

Des Weiteren wird vorgeschlagen, dass die Steckbuchseneinheit eine Abschirmöffnung zur Aufnahme des Innenabschirmelements aufweist, welche zwischen der Steckbuchsenteileinheit und der weiteren Steckbuchsenteileinheit angeordnet ist. Hierdurch kann vorteilhaft eine Abschirmung zwischen der Steckeröffnung und der weiteren Steckeröffnung erreicht und somit ein Übersprechen von Signalen vorteilhaft reduziert, vorzugsweise minimiert werden. Es kann somit vorteilhaft eine Steckbuchse mit verbesserten Eigenschaften hinsichtlich einer elektromagnetischen Verträglichkeit bereitgestellt werden. Das Innenabschirmelement ist vorzugsweise zu einer Abschirmung der Steckbuchsenteileinheit von der weiteren Steckbuchsenteileinheit vorgesehen.

Darüber hinaus wird vorgeschlagen, dass die Steckbuchsenabschirmeinheit ein Außenabschirmelement aufweist, welches eine Außenseite der Steckbuchseneinheit zumindest zu einem Großteil abdeckt. Hierdurch kann vorteilhaft eine Abschirmung der Steckbuchse gegenüber einer Umgebung, insbesondere gegenüber zu der Steckbuchse benachbart angeordneten weiteren Steckbuchsen, reduziert, vorzugsweise minimiert werden. Es kann somit vorteilhaft eine Steckbuchse mit weiter verbesserten Eigenschaften hinsichtlich einer elektromagnetischen Verträglichkeit bereitgestellt werden. Das Außenabschirmelement kann beispielsweise als ein Element aus einem gebogenen und/oder gestanzten Blech aus einem Metall und/oder einer Metalllegierung ausgebildet sein. Vorzugsweise ist das Außenabschirmelement in einem montierten Zustand über zumindest einen Kontakt elektrisch leitend mit dem Innenabschirmelement verbunden. Vorzugsweise ist das Außenabschirmelement in dem verbundenen Zustand über zumindest einen Schirmkontakt elektrisch leitend mit der Leiterplatte verbunden.

Überdies wird vorgeschlagen, dass das Außenabschirmelement zumindest eine Ausnehmung zur Durchführung des Lichtwellenleiters aufweist. Hierdurch kann vorteilhaft eine Steckbuchse bereitgestellt werden, in welcher die vorhergenannten vorteilhaften Eigenschaften der Lichtwellenleitereinheit und der Steckbuchsenabschirmeinheit miteinander kombiniert sind. Vorzugsweise entspricht eine Anzahl von Ausnehmungen des Außenabschirmelements einer Anzahl von Durchgangsöffnungen der Steckbuchseneinheit. In dem montierten Zustand der Steckbuchse ist das Außenabschirmelement vorzugsweise derart mit der Steckbuchseneinheit verbunden, dass die Ausnehmung im Wesentlichen deckungsgleich mit der Durchgangsöffnung der Steckbuchseneinheit angeordnet ist.

Die Erfindung betrifft ferner ein Steckverbindersystem mit zumindest einer Steckbuchse nach einem der vorhergehend beschriebenen Ausgestaltungen und mit zumindest einem Stecker, welcher die korrespondierende Steckereinheit aufweist. Ein derartiges Steckverbindersystem zeichnet sich unter anderem insbesondere durch die vorhergenannten vorteilhaften Eigenschaften der Steckbuchse, insbesondere im Hinblick auf eine Flexibilität sowie die kompakten Ausmaße des Steckers, aus. Das Steckverbindersystem kann darüber hinaus eine Mehrzahl von weiteren Steckbuchsen, welche insbesondere identisch oder verschieden zu der Steckbuchse ausgebildet sind, und dazu korrespondierende weitere Stecker mit entsprechenden Steckereinheiten aufweisen. Ferner kann das Steckverbindersystem weitere Einheiten und/oder Elemente, beispielsweise Kabel und/oder Adapter und/oder eine Leiterplatte, mit welcher die Steckbuchse verbunden ist, aufweisen.

Die Erfindung betrifft zudem ein Steckbuchsenkit zur Herstellung einer Steckbuchse gemäß einer der vorhergehend beschriebenen Ausgestaltungen, mit der Steckbuchseneinheit, der Lichtwellenleitereinheit und der Steckbuchsenabschirmeinheit. Durch ein derartiges Steckbuchsenkit kann die Steckbuchse vorteilhaft einfach hergestellt werden und beispielsweise von Geräteherstellern besonders einfach in verschiedenen Geräten integriert werden.

Des Weiteren wird ein Verfahren zur Herstellung einer Steckbuchse mit dem vorhergehend beschriebenen Steckbuchsenkit vorgeschlagen, wobei die Steckbuchseneinheit mit der Steckbuchsenabschirmeinheit versehen wird und anschließend die Lichtwellenleitereinheit mit der Steckbuchseneinheit verbunden wird. Mittels eines derartigen Verfahrens kann die Steckbuchse vorteilhaft besonders einfach, schnell und zuverlässig mit dem Steckbuchsenkit hergestellt werden.

Die erfindungsgemäße Steckbuchse sowie das erfindungsgemäße Verfahren zur Herstellung einer Steckbuchse mit einem Steckbuchsenkit soll hierbei nicht auf die oben beschriebene Anwendung und Ausführungsform beschränkt sein. Insbesondere können die erfindungsgemäße Steckbuchse sowie das erfindungsgemäße Verfahren zur Herstellung einer Steckbuchse mit einem Steckbuchsenkit zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen.

### Zeichnungen

Weitere Vorteile ergeben sich aus der folgenden Zeichnungsbeschreibung. In den Zeichnungen sind acht Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Steckverbindersystem mit einer Steckbuchse und einem Stecker in einer schematischen perspektivischen Darstellung,
- Fig. 2: die Steckbuchse in einer schematischen Darstellung,
- Fig. 3: die Steckbuchse mit einem Lichtwellenleiter in einer schematischen Darstellung,
- Fig. 4: ein Steckbuchsenkit zur Herstellung der Steckbuchse,
- Fig. 5: ein schematisches Verfahrensfließbild eines Verfahrens zur Herstellung der Steckbuchse mit dem Steckbuchsenkit,
- Fig. 6: ein Steckerkit zur Feldkonfektionierung des Steckers,
- Fig. 7: ein Kabelknickschutz des Steckers und ein Kodierelement in zwei schematischen Ansichten,
- Fig. 8: ein schematisches Verfahrensfließbild eines Verfahrens zur Feldkonfektionierung eines Kabels mit dem Stecker,
- Fig. 9: ein weiteres Ausführungsbeispiel eines Steckers in einer schematischen perspektivischen Darstellung,
- Fig. 10: ein Steckerkit zur Feldkonfektionierung des Steckers aus dem Ausführungsbeispiel der Figur 9,
- Fig. 11: eine schematische Schnittdarstellung durch eine Steckereinheit und eine Steckerabschirmeinheit Steckers des Ausführungsbeispiels aus der Figur 9,
- Fig. 12: ein weiteres Ausführungsbeispiel eines Steckers mit einer Steckereinheit und einer Steckerabschirmeinheit in einer schematischen Schnittdarstellung,
- Fig. 13: ein weiteres Ausführungsbeispiel eines Steckers mit einer Steckereinheit und einer Steckerabschirmeinheit in einer schematischen Schnittdarstellung
- Fig. 14: ein weiteres Ausführungsbeispiel eines Steckers mit einer Steckereinheit und einer Steckerabschirmeinheit in einer schematischen Schnittdarstellung
- Fig. 15: ein weiteres Ausführungsbeispiel eines Steckers mit einem Kabelnickschutz und einem Kodierelement in zwei schematischen Ansichten,
- Fig. 16: ein weiteres Ausführungsbeispiel eines Steckers mit einem Kabelnickschutz und einem Kodierelement in zwei schematischen Ansichten, und
- Fig. 17: ein weiteres Ausführungsbeispiel eines Steckers mit einem Kabelnickschutz und einem Kodierelement in zwei schematischen Ansichten.

### Beschreibung der Ausführungsbeispiele

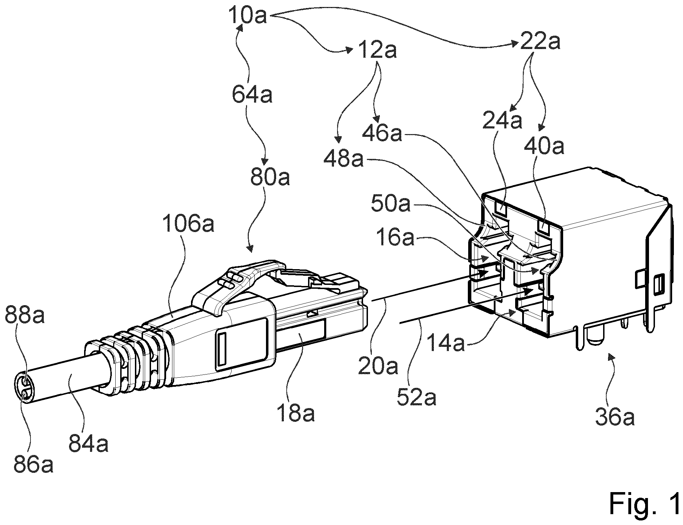

Fig. 1 zeigt ein Steckverbindersystem 64a. Das Steckverbindersystem 64a ist als ein Single-Pair-Ethernet- Steckverbindersystem ausgebildet. Das Steckverbindersystem 64a weist eine Steckbuchse 10a und einen Stecker 80a auf.

Die Steckbuchse 10a ist als Single-Pair-Ethernet-Steckbuchse ausgebildet. Die Steckbuchse 10a weist eine Anschlusseinheit 36a zu einer Verbindung mit einer Leiterplatte (nicht dargestellt) auf. Die Steckbuchse 10a weist eine Steckbuchseneinheit 12a auf. An einer Vorderseite 14a weist die Steckbuchseneinheit 12a eine Steckeröffnung 16a auf. Die Steckeröffnung 16a ist zur Aufnahme einer korrespondierenden Steckereinheit 18a entlang einer Steckrichtung 20a vorgesehen. Die Steckbuchseneinheit 12a weist eine Steckbuchsenteileinheit 46a auf. Die Steckbuchsteileinheit 46a weist die Steckeröffnung 16a auf. Die Steckbuchseneinheit 12a weist eine weitere Steckbuchsenteileinheit 48a auf. Die weitere Steckbuchsenteileinheit 48a weist eine weitere Steckeröffnung 50a auf. Die weitere Steckeröffnung 50a ist zur Aufnahme einer weiteren Steckereinheit (nicht dargestellt) entlang einer weiteren Steckrichtung 52a vorgesehen. Die weitere Steckrichtung 52a ist parallel zu der Steckrichtung 20a.Die Steckbuchsenteileinheit 46a ist einstückig mit der weiteren Steckbuchsenteileinheit 48a ausgebildet.

Der Stecker 80a des Steckverbindersystems 64a weist die zu der Steckeröffnung 16a korrespondierende Steckereinheit 18a auf.

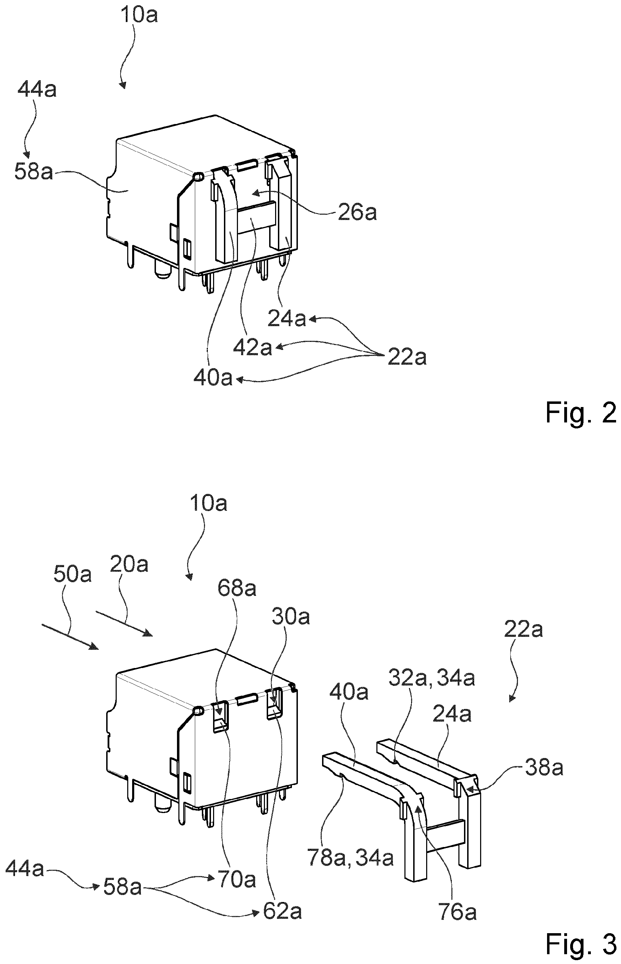

Figur 2 zeigt die Steckbuchse 10a in einer schematischen Ansicht. Die Steckbuchse 10 weist eine Lichtwellenleitereinheit 22a auf. Die Lichtwellenleitereinheit 22 umfasst zumindest einen Lichtwellenleiter 24a. Der Lichtwellenleiter 24a erstreckt sich von einer Rückseite 26a der Steckbuchseneinheit 12a zu der Vorderseite 14a (vgl. Figur 1).

Vorliegend weist die Lichtwellenleitereinheit 22a einen weiteren Lichtwellenleiter 40a auf. Der weitere Lichtwellenleiter 40a erstreckt sich ebenfalls von der Rückseite 26a der Steckbuchseneinheit 12a zu der Vorderseite 14a (vgl. Figur 1).

Mittels des Lichtwellenleiters 22a und/oder des weiteren Lichtwellenleiters 40a der Lichtwellenleitereinheit 22a kann/können in einem Betriebszustand der Steckbuchse 10a optische Signale (nicht dargestellt) von externen Signalquellen (nicht dargestellt), beispielsweise LEDs, welche unabhängig von der Steckbuchse 10a auf der Leitplatte montiert sind, über die Rückseite 26a zu der Vorderseite 14a transportiert werden, sodass beispielsweise der Betriebszustand oder eine Störung oder dergleichen an der Vorderseite 14a der Steckbuchse 10a angezeigt werden kann.

Die Lichtwellenleitereinheit 22a weist einen Verbindungssteg 42a auf. Der Verbindungssteck 42a verbindet den Lichtwellenleiter 24a mit dem weiteren Lichtwellenleiter 40a. Der Verbindungsteck 42a ist zwischen dem Lichtwellenleiter 24a und dem weiteren Lichtwellenleiter 40a angeordnet und im Wesentlichen senkrecht zu den beiden Lichtwellenleitern 24a, 40a ausgerichtet.

Figur 3 zeigt die Steckbuchse 10a und die Lichtwellenleitereinheit 22a in einer schematischen Darstellung. Die Steckbuchseneinheit 12a weist zumindest eine Durchgangsöffnung 30a zur Aufnahme des Lichtwellenleiters 24a auf. Die Durchgangsöffnung 30a ist an der Steckbuchsenteileinheit 46a der Steckbuchseneinheit 12a angeordnet. Die Durchgangsöffnung 30a erstreckt sich von der Rückseite 26a zu der Vorderseite 14a der Steckbuchseneinheit 12a und zwar entgegen der Steckrichtung 20a. Vorliegend weist die Steckbuchseneinheit 12a eine weitere Durchgangsöffnung 68a zur Aufnahme des weiteren Lichtwellenleiters 40a auf. Die weitere Durchgangsöffnung 68a ist an der weiteren Steckbuchsenteileinheit 48a angeordnet. Die weitere Durchgangsöffnung 68a erstreckt sich von der Rückseite 26a zu der Vorderseite 14a und zwar entgegen der weiteren Steckrichtung 52a.

Der Lichtwellenleiter 24a weist ein Verbindungselement 32a zur lösbaren Verbindung mit der Steckbuchseneinheit 12a auf. Vorliegend ist das Verbindungselement 32a als ein Rastelement 34a ausgebildet und zu einem Verrasten mit einem, in und/oder an der Durchgangsöffnung 30a angeordneten, Gegenrastelement (nicht dargestellt) der Steckbuchseneinheit 12a vorgesehen. Das als Rastelement 34a ausgebildete Verbindungselement 32a des Lichtwellenleiters 24a ist vorliegend als eine Rastausnehmung ausgebildet. Das innerhalb der Durchgangsöffnung angeordnete Gegenrastelement ist als ein zu dem Rastelement 34a korrespondierender Rasthaken ausgebildet.

Der weitere Lichtwellenleiter 40a weist ein weiteres Verbindungselement 78a auf. Das weitere Verbindungselement 78a ist als Rastelement 24a und zwar als Rastausnehmung ausgebildet und zu einem Verrasten mit einem, in und/oder an der weiteren Durchgangsöffnung 68a angeordneten weiteren Gegenrastelement (nicht dargestellt) vorgesehen. Das weitere Verbindungselement 78a des weiteren Lichtwellenleiters 40a ist im Wesentlichen identisch zu dem Verbindungselement 32a des Lichtwellenleiters 24a ausgebildet.

Der Lichtwellenleiter 24a weist einen Umlenkbereich 38a zur Umlenkung eines optischen Signals (nicht dargestellt) auf. Der Umlenkbereich 38a ist als eine Winkelfläche innerhalb des Lichtwellenleiters 24a ausgebildet. Das optische Signal wird in dem Umlenkbereich mittels Totalreflexion, ähnlich wie in einem Periskop, umgelenkt.

Der weitere Lichtwellenleiter 40a weist einen weiteren Umlenkbereich 76a auf. Im Unterschied zu dem Umlenkbereiche 38a des Lichtwellenleiters 24a weist der weitere Umlenkbereich 76a des weiteren Lichtwellenleiters 40a einen Radius auf und ist, ähnlich wir eine Glasfaser, gebogen.

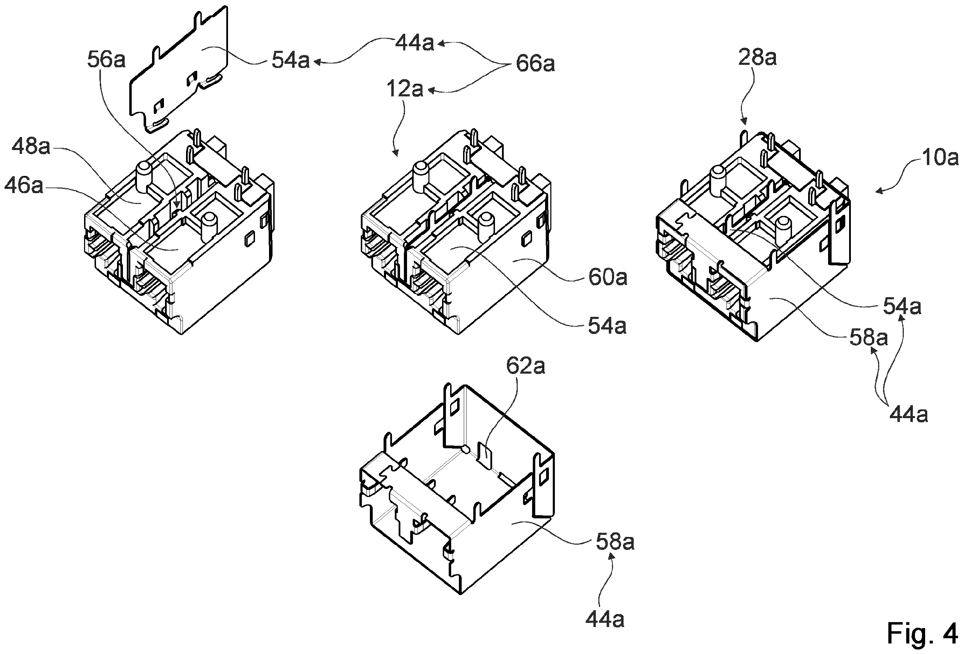

Figur 4 zeigt ein Steckbuchsenkit 66a zur Herstellung der Steckbuchse 10a in verschiedenen schematischen Ansichten. Das Steckbuchsenkit 66a umfasst die Steckbuchseneinheit 12a, die Lichtwellenleitereinheit 22a (vgl. Figur 3) und eine Steckbuchsenabschirmeinheit 44a. In einer rechten Darstellung der Figur 4 ist die Steckbuchse 10a in einem montierten Zustand in einer schematischen Ansicht auf eine Unterseite 28a der Steckbuchseneinheit 12a dargestellt. Die Steckbuchse 10a weist die Steckbuchsenabschirmeinheit 44a auf. Die Steckbuchsenabschirmeinheit 44a umfasst ein Innenabschirmelement 54a und ein Außenabschirmelement 58a. Das Innenabschirmelement 54a ist in dem montierten Zustand zwischen der Steckbuchsenteileinheit 46a und der weiteren Steckbuchsenteileinheit 48a angeordnet. In einer linken Ansicht der Figur 4 sind die Steckereinheit 12a und das Innenabschirmelement 54a schematisch dargestellt. Die Steckbuchseneinheit 12a weist eine Abschirmöffnung 56a auf. Die Abschirmöffnung 56a ist zur

Aufnahme des Innenabschirmelements 54a der Steckbuchsenabschirmeinheit 44a vorgesehen. Die Abschirmöffnung 56a ist zwischen der Steckbuchsenteileinheit 46a und der weiteren Steckbuchsenteileinheit 48a angeordnet.

Eine mittlere Ansicht der Figur 4 zeigt die Steckereinheit 12 mit dem in der Abschirmöffnung 54a angeordneten Innenabschirmelement 54a. Das Außenabschirmelement 58a deckt, in dem montierten Zustand, eine Außenseite 60a der Steckbuchseneinheit 12a zumindest zu einem Großteil ab.

Das Außenabschirmelement 58a weist zumindest eine Ausnehmung 62a zur Durchführung des Lichtwellenleiters 24a auf. Vorliegend weist das Außenabschirmelement 58a eine weitere Ausnehmung 70a (vgl. Figur 3) zur Durchführung des weiteren Lichtwellenleiters 40a auf. Die Ausnehmung 62a ist vor der Durchgangsöffnung 30a angeordnet. Die weitere Ausnehmung 70a ist vor der weiteren Durchgangsöffnung 68a angeordnet (vgl. Figur 3).

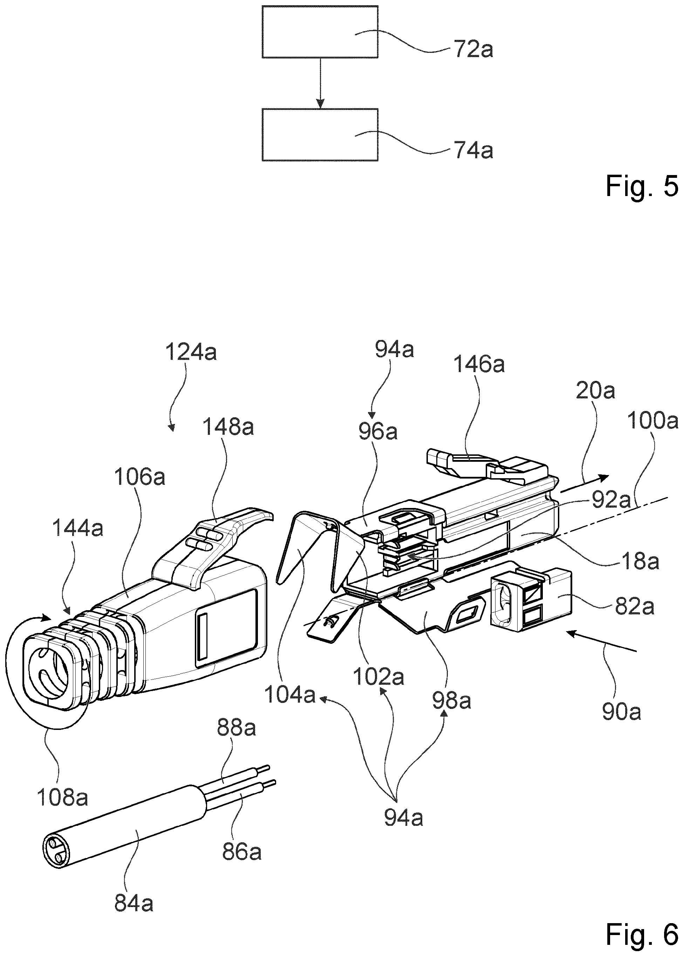

Figur 5 zeigt ein schematisches Verfahrensfließbild eines Verfahrens zur Herstellung der Steckbuchse 10a mit dem Steckbuchsenkit 66a. Das Verfahren umfasst zumindest zwei Verfahrensschritte 72a,74a. In einem ersten Verfahrensschritt 72a wird Steckbuchseneinheit 12a mit der Steckbuchsenabschirmeinheit 44a versehen. Dabei wird zunächst des Innenabschirmelement 54a in die Abschirmöffnung 56a der Steckbuchseneinheit 12a eingebracht (vgl. Figur 4). Anschließend wir in dem ersten Verfahrensschritt 72a das Außenabschirmelement 58a an der Außenseite 60a der Steckereinheit 12a angebracht und mit dem Innenabschirmelement 54a kontaktiert (vgl. Figur 4). In einem zweiten Verfahrensschritt 74a des Verfahrens wird die Lichtwellenleitereinheit 22a mit der Steckereinheit 12a verbunden. Dabei wird der Lichtwellenleiter 24a durch die Ausnehmung 62a des Außenabschirmelements 58a hindurch in die Durchgangsöffnung 30a der Steckbuchseneinheit 12a eingeführt und zwar von der Rückseite 26a entgegen der Steckrichtung 20a (vgl. Figur 3). Gleichzeitig wird in dem weiteren Verfahrensschritt 72a der weiter Lichtwellenleiter 40a, welcher mit dem Lichtwellenleiter 24a über den Verbindungssteg 42a verbunden ist, durch die weitere Ausnehmung 70a des Außenabschirmelements 58a hindurch in die weitere Durchgangsöffnung 68a der Steckbuchseneinheit 12a eingeführt und zwar entgegen der weiteren Steckrichtung 52a (vgl. Figur 39. Beim Einführen des Lichtwellenleiters 24a in die Durchgansöffnung 30a der Steckbuchseneinheit wird das als Rastelement 34a ausgebildete Verbindungselement 32a mit dem Gegenrastelement verrastet. Gleichermaßen wird beim Einführen des weiteren Lichtwellenleiters 40a in die weitere Durchgangsöffnung 68a das als Rastelement 34a ausgebildete weitere Verbindungselement 78a mit dem weiteren Gegenrastelement verrastet (vgl. Figur 3).

Der in Figur 1 dargestellte Stecker 80a des Steckverbindersystems 64a weist eine Steckereinheit 18a zum Einstecken in die korrespondierende Steckbuchseneinheit 12a der Steckbuchse 10a auf.

Der Stecker 80a weist einen Beschaltungsblock 82a (vgl. Figur 6) zur Aufnahme zweier Leitungsadern 86a, 88a eines Kabels 84a auf. In einem, wie in der Figur 1 dargestellten, montierten Zustand des Steckers 80a ist der Beschaltungsblock 82a entlang einer Montagerichtung 90a, welche senkrecht zu der Steckrichtung 20a ist, mit der Steckereinheit 18a verbunden. Der Beschaltungsblock 82a ist in dem montierten Zustand zumindest zu einem Großteil innerhalb der Steckereinheit 18a angeordnet. Vorliegend ist der Beschaltungsblock 82a vollständig in der Steckereinheit 18a angeordnet.

Der Stecker 80a weist eine Steckerabschirmeinheit 94a (vgl. Figur 6). In dem montierten Zustand umgibt die Steckerabschirmeinheit 94a die Steckereinheit 18a zumindest abschnittsweise.

Figur 6 zeigt ein Steckerkit 122a zur Feldkonfektionierung des Steckers 80a. In der Figur 6 ist der Stecker 82a in einem demontierten Zustand dargestellt. Das Steckerkit 122a umfasst die Steckereinheit 18a, den Beschaltungsblock 82a und eine Steckerabschirmeinheit 94a des Steckers 80a.

Die Steckereinheit 18a weist ein Verriegelungselement 146a auf. Das Verriegelungselement 146a ist zu einer Verriegelung der Steckereinheit 18a in der Steckeröffnung 16a der Steckbuchse 10a vorgesehen (vgl. Figur 1).

Die Steckereinheit 18a weist einen Aufnahmeraum 92a zur Aufnahme des Beschaltungsblocks 82a auf. Der Aufnahmeraum 92a ist entgegen der Montagerichtung 90a und entgegen der Steckrichtung 20a, insbesondere zu einer Umgebung hin und insbesondere in dem, wie in Figur 6 dargestellten, demontierten Zustand des Steckers 80a, offen.

Die Steckerabschirmeinheit 94a weist ein Steckerabschirmelement 96a und eine Steckerabschirmklappe 98a auf. Die Steckerabschirmklappe 98a ist schwenkbar mit dem Steckerabschirmelement 96a verbunden. Die Steckerabschirmklappe 98a ist relativ zu dem Steckerabschirmelement 96a schwenkbar und zwar um eine Schwenkachse 100a. Die Schwenkachse 100a verläuft parallel zur Steckrichtung 20a.

Die Steckerabschirmeinheit 94a weist zwei Kontaktierungslaschen 102a, 104a auf. Die Kontaktierungslaschen 102a, 104a sind zu einem Umgreifen des Kabels und zu einem Vercrimpen vorgesehen. In dem montierten Zustand des Steckers 80a umgreifen die Kontaktierungslaschen 102a, 104a das Kabel 84a und sind mit diesem vercrimpt, wodurch die Steckerabschirmeinheit 94a mit dem Kabel 84a kontaktiert ist. Zudem dienen die Kontaktierungslaschen 102a, 104a in dem montierten Zustand zu einer Zugentlastung des Kabels 84a.

Der Stecker 80a weist einen Kabelknickschutz 106a zum Schutz des Kabels 84a gegen ein Verknicken auf. Der Kabelknickschutz 106a ist in einer Umfangsrichtung 108a bezüglich der Steckrichtung 20a zumindest im Wesentlichen geschlossen. In dem montierten Zustand des Steckers 80a sichert der Kabelknickschutz 106a die Verbindung des Beschaltungsblocks 82a mit der Steckereinheit 18a sowie eine Verbindung der Steckerabschirmeinheit 94a mit der Steckereinheit 18a. Der Kabelknickschutz 106a weist einen flexiblen Bereich 144a auf. In dem montierten Zustand umgibt der flexible Bereich 144a das Kabel 84a, sodass dieses flexibel beweglich ist.

Der Kabelknickschutz 106a weist ein Entriegelungselement 148a auf. Das Entriegelungselement 146a ist zu einer Entriegelung des Verriegelungselements 146a in einem verriegelten Zustand der Steckereinheit 18a in der Steckeröffnung 16a der Steckbuchse 10a vorgesehen (vgl. Figur 1).

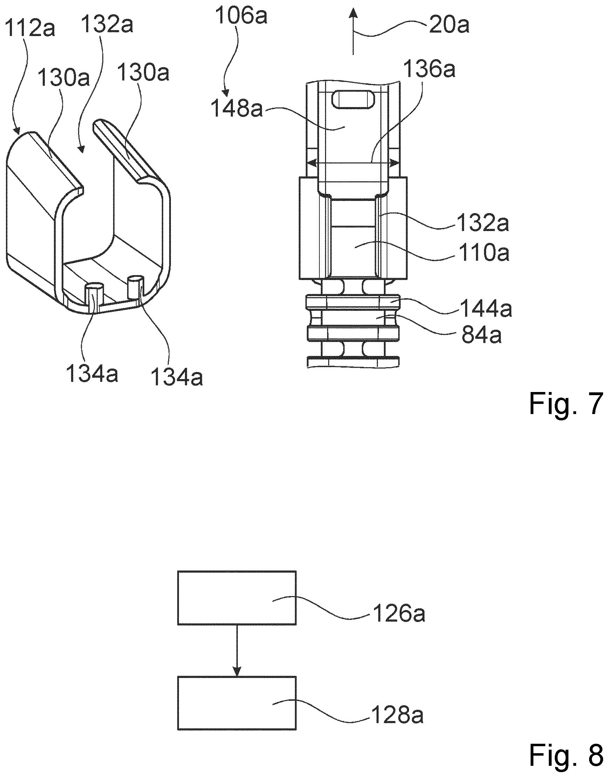

Der Kabelknickschutz 106a weist ein Verbindungselement 110a auf. Das Verbindungselement 110a ist zu einer Verbindung mit einem Kodierelement 112a (vgl. Figur 7) vorgesehen. Das Verbindungselement 110a ist als eine speziell geformte Außenkontur des Kabelknickschutzes 106a zwischen dem Betätigungselement 148a und dem flexiblen Bereich 144a ausgebildet.

Figur 7 zeigt das Kodierelement 112a einmal in einer schematischen Einzelansicht und einmal in Verbindung mit dem Kabelknickschutz 106a. Das Kodierelement weist zwei spiegelsymmetrisch ausgebildete und gegenüberliegend angeordnete Greifhaken 130a auf, welche durch eine Öffnung 132a voneinander getrennt sind. Die Greifhaken 130a sind elastisch verformbar ausgebildet. Das Kodierelement 112a weist zwei Pins 134a auf, welche bei einer Verbindung mit dem Kabelknickschutz 106a in entsprechen geformte Ausnehmungen (nicht dargestellt) des Verbindungselements 110a eingreifen.

Zu einer Verbindung des Kodierelements 112a mit dem Kabelknickschutz 106a werden die beiden Greifhaken 130a in entgegengesetzte Richtungen auseinandergezogen, sodass sich die Öffnung 132a bis auf eine Breite 136a des Kabelknickschutzes 106a verbreitert. Anschließend wird das Kodierelement 112a von einer Unterseite auf den Kabelknickschutz 106a aufgeschoben. Die Greifhaken 130a formen sich auf Grund ihrer Elastizität entsprechend wieder in ihrer Ausgangsstellung zurück und umgreifen das Verbindungselement 110a des Kabelknickschutzes 106a formschlüssig. Zusätzlich greifen die Pins 134a des Kodierelements 112a in die Ausnehmungen des Verbindungselements 110a ein, sodass ein Verrutschen des Kodierelements 112a in Richtung des flexiblen Bereichs des Kabelknickschutzes 106a verhindert ist.

Figur 8 zeigt ein schematisches Verfahrensfließbild eines Verfahrens zur Feldkonfektionierung des Kabels 84a mit dem Stecker 80a mittels des Steckerkits 124a. Das Verfahren umfasst zumindest zwei Verfahrensschritte 126a, 128a. In einem Verfahrensschritt 126a wird das Kabel 84a mit dem Beschaltungsblock 82a verbunden. Dabei werden die beiden Leitungsadern 86a, 88a des Kabels 84a in den Beschaltungsblock 82a eingeführt und ein Überstand der Leitungsadern 86a, 88a wird abgeschnitten. Anschließend wird in einem weiteren Verfahrensschritt 128a der Beschaltungsblock 82a mit der Steckereinheit 18a entlang der Montagerichtung 90a verbunden. Dabei wird der Beschaltungsblock 82a in den Aufnahmeraum 92a eingesteckt, sodass dabei die Leitungsadern 86a, 88a des Kabels 84a mit den Steckerkontakten der Steckereinheit 18a verbunden werden und zwar mittels einer lösbaren Schneidklemmverbindung.

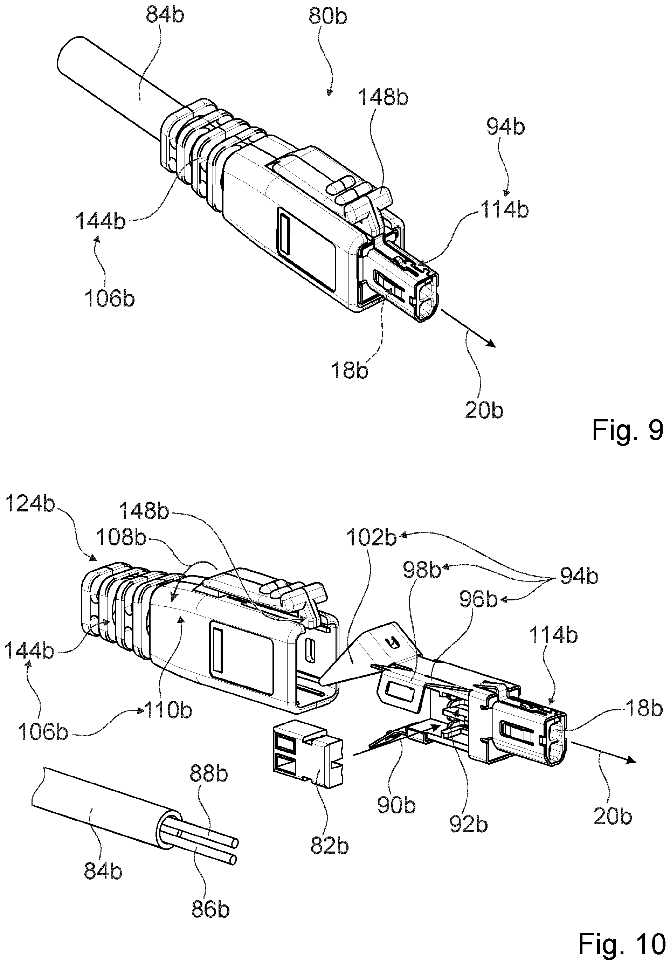

In den Figuren 9 bis 17 sind sieben weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 8, verwiesen werden kann. Zur Unterscheidung der Ausführungsbeispiele ist der Buchstabe a den Bezugszeichen des Ausführungsbeispiels in den Figuren 1 bis 8 nachgestellt. In den Ausführungsbeispielen der Figuren 9 bis 17 ist der Buchstabe a durch die Buchstaben b bis h ersetzt.

Figur 9 zeigt ein weiteres Ausführungsbeispiel eines Steckers 80b in einer schematischen Ansicht. Der Stecker 80b unterscheidet sich von dem Stecker 80a des vorhergehenden Ausführungsbeispiels insbesondere hinsichtlich einer Anschlussart. Der Stecker 80b ist als ein MSP-Stecker ausgebildet. Der Stecker 80b weist eine Steckereinheit 18b zum Einstecken in eine korrespondierende Steckbuchse (nicht dargestellt) entlang einer Steckrichtung 20b auf.

Der Stecker 80b weist einen Beschaltungsblock 82b (vgl. Figur 8) zur Aufnahme zweier Leitungsadern 86b, 88b eines Kabels 84b auf. In einem montierten Zustand des Steckers 80b ist der Beschaltungsblock 84b entlang einer Montagerichtung 80b, welche senkrecht zur Steckrichtung 20b ist, mit der Steckereinheit 18b verbunden. Eine Beschaltung des Steckers 80b mittels des Beschaltungsblocks 82b erfolgt im Wesentlichen identisch zu einer Beschaltung des Steckers 80a mittels des Beschaltungsblocks 82a, weshalb diesbezüglich auf die obige Beschreibung des Ausführungsbeispiels der Figuren 1 bis 6 verwiesen sei.

Der Stecker 80b weist eine Steckerabschirmeinheit 94b auf. In dem montierten Zustand des Steckers 80b umgibt die Steckerabschirmeinheit 94b die Steckereinheit 18b zumindest abschnittsweise.

Die Steckerabschirmeinheit 94b weist ein Riegelelement 114b zu einer Verriegelung der Steckereinheit 18b mit einer Steckbuchseneinheit (nicht dargestellt) und ein Betätigungselement 116b auf. Das Riegelelement 114b weist eine Riegellasche 120b auf. Das Betätigungselement 116b weist eine Betätigungslasche 118b auf. Das Betätigungselement 118b und das Riegelelement 120b wirken zumindest zu einer Entriegelung zusammen.

Figur 10 zeigt ein Steckerkit 122b zur Feldkonfektionierung des Steckers 80b in einer schematischen Ansicht. Eine Feldkonfektionierung des Steckers 80b mittels des Steckerkit 122b erfolgt im Wesentlichen analog zu der vorhergehend beschriebenen Feldkonfektionierung des Steckers 80a mittels der Steckerkits 122a des vorhergehenden Ausführungsbeispiels.

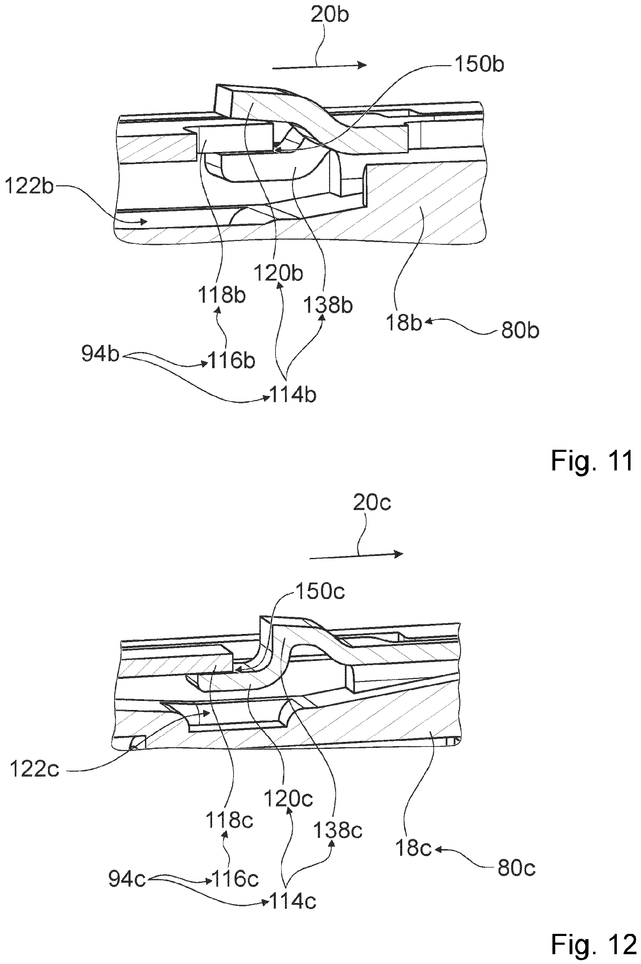

Figur 11 zeigt die Steckereinheit 18b und die Abschirmeinheit 94b des Steckers 80b in einer schematischen Schnittdarstellung. Die Betätigungslasche 118b ist parallel zu der Steckrichtung 20b ausgerichtet. Die Riegellasche 120b ist antiparallel zu der Steckrichtung 20b ausgerichtet. Die Betätigungslasche 120b kontaktiert die Riegellasche 120b form- und/oder kraftschlüssig entlang einer Krafteinwirkungsfläche 150b. Das Riegelelement 114b weist einen Riegelhaken 138b auf. In einem verriegelten Zustand der Steckereinheit 18b mit einer korrespondierenden Steckbuchse (nicht dargestellt) ist der Riegelhaken mit der Steckbuchse verriegelt. Der Riegelhaken 138b ist mit der Riegellasche 120b verbunden und in Steckrichtung 20b seitlich versetzt zu der Riegellasche 120b angeordnet.

Die Steckereinheit 18b weist einen Riegelaufnahmeraum 122b zur Aufnahme des Riegelelements 114b zumindest während der Entriegelung auf.

Der Stecker 80b weist einen Kabelknickschutz 106b zum Schutz eines Kabels 84b auf (vgl. Figur 10). Der Kabelknickschutz 106b weist ein Entriegelungselement 148b auf. Zu einer Entriegelung wird die Betätigungslasche 120b durch Druck auf das Entriegelungselement 148b betätigt. Dabei wird durch die Betätigungslasche 120b ein Drehmoment auf die Riegellasche 120b ausgeübt und die Riegellasche 120b wird in Richtung des Riegelaufnahmeraums 122b bewegt. Dabei bewegt sich der Riegelhaken 138b ebenfalls in Richtung des Riegelaufnahmeraums 122b und die Steckereinheit 18b wird entriegelt und kann entgegen der Steckrichtung 20b aus der Steckbuchse ausgezogen werden.

Figur 12 zeigt ein weiteres Ausführungsbeispiel eines Steckers 80c in einer schematischen Schnittdarstellung durch eine Steckereinheit 18c und eine Steckerabschirmeinheit 94c des Steckers 80c. Der Stecker 80c unterscheidet sich von dem Stecker 80b des vorhergehenden Ausführungsbeispiels im Wesentlichen hinsichtlich eines Riegelelements 114c einer Steckerabschirmeinheit 94c. Ansonsten kann auf die obigen Beschreibungen der Stecker 80a und 80b verwiesen werden. Das Riegelelement 114c weist einen Betätigungslasche 118c und eine Riegellasche 120c auf. Die Betätigungslasche 118c und die Riegellasche 120c wirken zumindest zu einer Entriegelung zusammen. Das Riegelelement 114c weist einen Riegelhaken 138c auf. Im Unterschied zu dem vorhergehenden Ausführungsbeispiel ist der Riegelhaken 138c in einer Steckrichtung 20c nicht seitlich zu der Riegellasche 120c versetzt, sondern erstreckt sich über die gesamte Breite des Riegelelements 114c senkrecht zur Steckrichtung 20c. Die Betätigungslasche 118c und die Riegellasche 120c erstrecken sich ebenfalls über die gesamte Breite des Riegelelements 114c senkrecht zur Steckrichtung 20c, sodass ein Krafteinwirkungsfläche 150c, entlang derer die Betätigungslasche 118c die Riegellasche 120c form- und/oder Kraftschlüssig kontaktiert, größer ist als die Krafteinwirkungsfläche 150b des vorhergehenden Ausführungsbeispiels. Somit kann eine effizientere Kraftübertragung von der Betätigungslasche 118c auf die Riegellasche 120c erreicht werden.

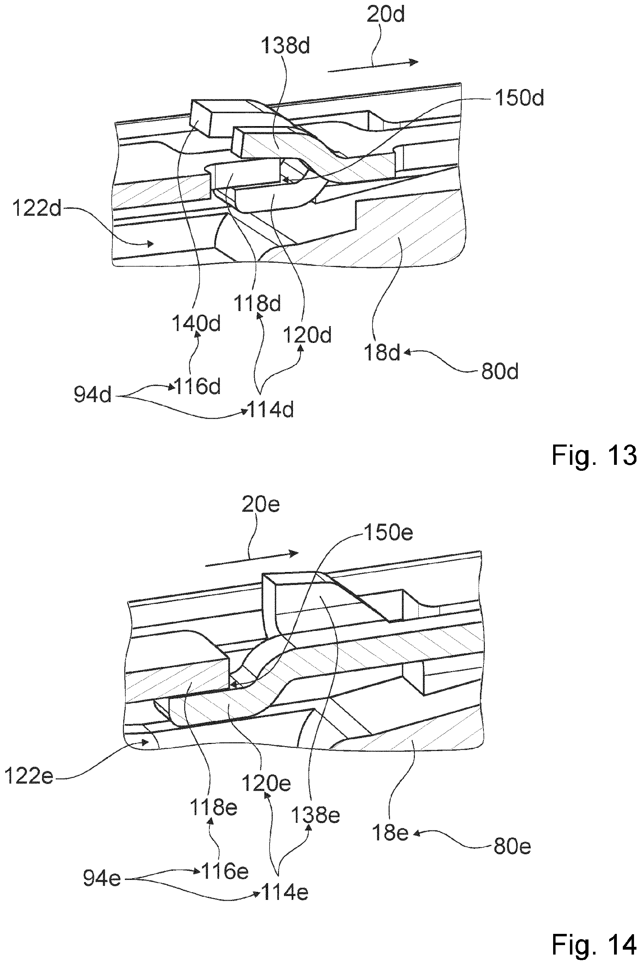

Figur 13 zeigt ein weiteres Ausführungsbeispiel eines Steckers 80d in einer schematischen Schnittdarstellung durch eine Steckereinheit 18d und eine Steckerabschirmeinheit 94d des Steckers 80d. Der Stecker 80d unterscheidet sich von den Stecker 80b und 80c der vorhergehenden Ausführungsbeispiele im Wesentlichen hinsichtlich eines Riegelelements 114d einer Steckerabschirmeinheit 94c. Ansonsten kann auf die obigen Beschreibungen der Stecker 80a und 80b verwiesen werden. Das Riegelelement 114d weist eine Betätigungslasche 118d und eine Riegelasche 120d auf, welche zumindest zu einer Entriegelung zusammenwirken. Das Riegelelement 114d weist einen Riegelhaken 138d und einen weiteren Riegelhaken 140d auf. In Blickrichtung entlang einer Steckrichtung 20d sind der Riegelhaken 138d und der weitere Riegelhaken 140d zueinander versetzt angeordnet. Die Riegellasche 120d ist mit dem Riegelhaken 138d und dem weiteren Riegelhaken 140d angeordnet und erstreckt sich unterhalb des Riegelhakens 138d und des weiteren Riegelhakens 140d über einen Spalt, dessen Breite einem Abstand zwischen dem Riegelhaken 138d und dem weiteren Riegelhaken 140d entspricht. Im Unterschied zu den vorhergehenden Ausführungsbeispielen der Figuren 11 und 12 kann mittels des Riegelelements 114d eine gleichmäßigere Kraftübertragung bei der Entriegelung und somit eine zuverlässigere Entriegelung ermöglicht werden.

Figur 14 zeigt ein weiteres Ausführungsbeispiel eines Steckers 80e in einer schematischen Schnittdarstellung durch eine Steckereinheit 18e und eine Steckerabschirmeinheit 94e des Steckers 80e. Der Stecker 80e unterscheidet sich von den Steckern 80b bis 80d der vorhergehenden Ausführungsbeispiele im Wesentlichen hinsichtlich eines Riegelelements 114e der Steckerabschirmeinheit 94e. Ansonsten kann auf die obigen Beschreibungen der Stecker 80a und 80b verwiesen werden. Das Riegelelement 114e weist eine Betätigungslasche 118e und eine Riegelasche 120e auf, welche zumindest zu einer Entriegelung zusammenwirken. Das Riegelelement 114d weist einen Riegelhaken 138e. Im Unterschied zu den Ausführungsbeispielen der Figuren 11 bis 13 ist der Riegelhaken 138e senkrecht zu dem Riegellasche 120e ausgerichtet. Die Riegellasche 120e und die Betätigungslasche 118e erstrecken sich über die gesamte Breite des Riegelelements 114e, sodass eine Krafteinwirkungsfläche150e analog zu dem Ausführungsbeispiel der Figur 12 vergrößert und eine Kraftübertragung von der Betätigungslasche 118e auf die Riegellasche 120e besonders effizient ist.

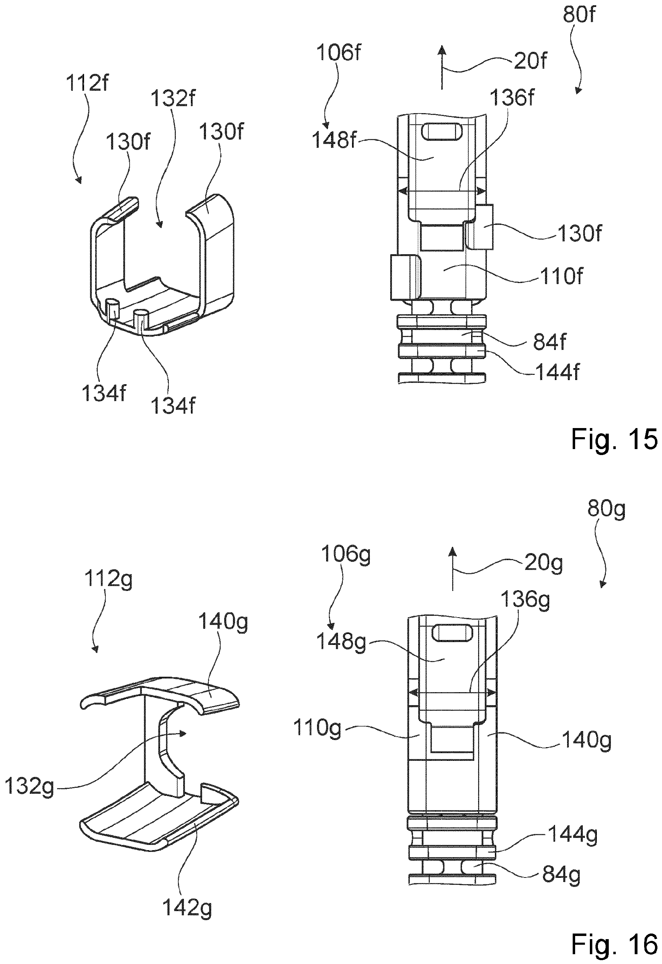

Figur 15 zeigt ein weiteres Ausführungsbeispiel eines Steckers 80f. Der Stecker 80f unterscheidet sich von den vorhergehenden Ausführungsbeispielen ausschließlich hinsichtlich einer Ausgestaltung eines Kodierelements 112f zur Verbindung mit einem Kabelknickschutz 106f des Steckers 80f. Der Stecker 80f kann ansonsten prinzipiell gemäß einer der vorhergehend für die Stecker 80a bis 80e beschriebenen Ausgestaltungen ausgebildet sein. Im Unterschied zu dem in Figur 7 gezeigten Kodierelement 112a des Steckers 80a, weist das Kodierelement 112f zwei schmalere Greifhaken 130f auf, welche in einem verbundenen Zustand mit dem Kabelknickschutz 106f entlang einer Steckrichtung 20f zueinander versetzt angeordnet sind. Hierdurch kann vorteilhaft ein Platzersparnis in Anordnungen mit mehreren Steckern 80f, welche senkrecht zur Steckrichtung 20f nebeneinander angeordnet sind erreicht werden. Da die Greifhaken 130f des Kodierelements 112f in Steckrichtung 20f zueinander versetzt angeordnet sind, können mehrere Stecker 80f im Vergleich zu einer Anordnung mit mehreren Steckern 80a, welche jeweils ein Kodierelement 112a aufweisen, jeweils um eine Wandstärke eines Greifhakens 130f näher nebeneinander platziert werden.

Figur 16 zeigt ein weiteres Ausführungsbeispiel eines Steckers 80g. Der Stecker 80g unterscheidet sich von den vorhergehenden Ausführungsbeispielen ausschließlich hinsichtlich einer Ausgestaltung eines Kodierelements 112g zur Verbindung mit einem Kabelknickschutz 106g des Steckers 80g. Der Stecker 80g kann ansonsten prinzipiell gemäß einer der vorhergehend für die Stecker 80a bis 80e beschriebenen Ausgestaltungen ausgebildet sein. Im Unterschied zu den in den Figur 7 und 15 gezeigten Kodierelemente 112a und 112f, ist das Kodierelement 112g des Steckers 80g ohne Pins ausgebildet. Zudem wird das Kodierelement 112g nicht von einer Unterseite, sondern seitlich mit einem Verbindungselement 110g des Kabelknickschutzes 106g verbunden. Das Kodierelement 112g weist einen oberen Greifhaken 140g und einen unteren Greifhaken 142g auf, welche bezüglich einer Öffnung 134g des Kodierelements 112g auf gegenüberliegend angeordnet sind. In einem verbundenen Zustand des Kodierelements 112g wird eine Breite 136g des Kabelknickschutzes 106g weder durch den oberen Greifhaken 140g noch durch den unteren Greifhaken 142g überschritten. Somit kann eine Platzersparnis in Anordnungen mit mehreren Steckern 80g nebeneinander gegenüber dem Kodierelement 112f des vorhergehenden Ausführungsbeispiels vorteilhaft weiter erhöht werden.

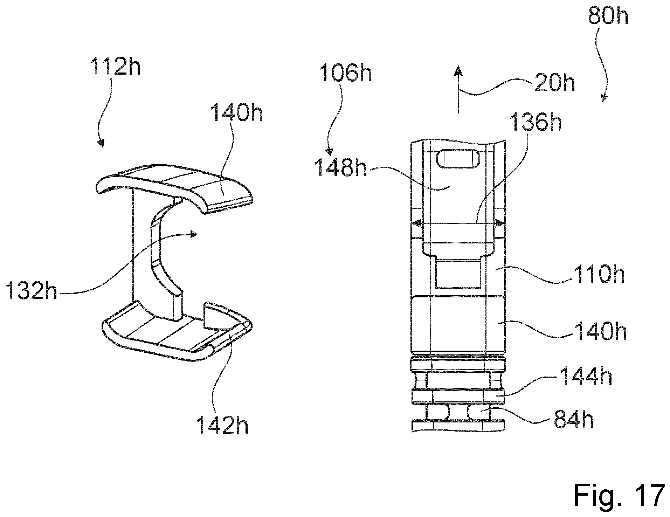

Figur 17 zeigt ein weiteres Ausführungsbeispiel eines Steckers 80h. Der Stecker 80h unterscheidet sich von den vorhergehenden Ausführungsbeispielen ausschließlich hinsichtlich einer Ausgestaltung eines Kodierelements 112h zur Verbindung mit einem Kabelknickschutz 106h des Steckers 80h. Der Stecker 80h kann ansonsten prinzipiell gemäß einer der vorhergehend für die Stecker 80a bis 80e beschriebenen Ausgestaltungen ausgebildet sein. Im Unterschied zu dem Kodierelement 112g des vorhergehend Ausführungsbeispiels, weisen ein oberer Greifhaken 140h und ein unterer Greifhaken 142h des Kodierelements 112h jeweils eine kleinere Erstreckungen in Längsrichtung auf. Somit weist das Kodierelement 112h in einem verbundenen Zustand mit dem Kabelknickschutz 106h insgesamt eine kleinere Erstreckung in Längsrichtung parallel zu einer Steckrichtung 20f des Steckers 80fauf. Dementsprechend ist auch ein Verbindungselement 110h des Kabelknickschutzes 106h zur Verbindung mit dem Kodierelement 112h in Längsrichtung parallel zu einer Steckrichtung 20f des Steckers 80fgegenüber den vorhergehenden Ausführungsbeispiele kürzer ausgebildet, sodass vorteilhaft eine Platzersparnis in Steckrichtung 20f erreicht werden kann.

### Bezugszeichen

- 10: Steckbuchse
- 12: Steckbuchseneinheit
- 14: Vorderseite
- 16: Steckeröffnung
- 18: Steckereinheit
- 20: Steckrichtung
- 22: Lichtwellenleitereinheit
- 24: Lichtwellenleiter
- 26: Rückseite
- 28: Unterseite
- 30: Durchgangsöffnung
- 32: Verbindungselement
- 34: Rastelement
- 36: Anschlusseinheit
- 38: Umlenkbereich
- 40: weiterer Lichtwellenleiter
- 42: Verbindungssteg
- 44: Steckbuchsenabschirmeinheit
- 46: Steckbuchsenteileinheit
- 48: weiter Steckbuchsenteileinheit
- 50: weitere Steckeröffnung
- 52: weitere Steckrichtung
- 54: Innenabschirmelement
- 56: Abschirmöffnung
- 58: Außenabschirmelement
- 60: Außenseite
- 62: Ausnehmung
- 64: Steckverbindersystem
- 66: Steckbuchsenkit
- 68: weitere Durchgangsöffnung
- 70: weitere Ausnehmung
- 72: erster Verfahrensschritt
- 74: zweiter Verfahrensschritt
- 76: weiterer Umlenkbereich
- 78: weiteres Verbindungselement
- 80: Stecker
- 82: Beschaltungsblock
- 84: Kabel
- 86: Leitungsader
- 88: weitere Leitungsader
- 90: Montagerichtung
- 92: Aufnahmeraum
- 94: Steckerabschirmeinheit
- 96: Steckerabschirmelement
- 98: Steckerabschirmklappe
- 100: Schwenkachse
- 102: Kontaktierungslasche
- 104: weitere Kontaktierungslasche
- 106: Kabelknickschutz
- 108: Umfangsrichtung
- 110: Verbindungselement114a
- 112: Kodierelement
- 114: Riegelelement
- 116: Betätigungselement
- 118: Betätigungslasche
- 120: Riegellasche
- 122: Riegelaufnahmeraum
- 124: Steckerkit
- 126: Verfahrensschritt
- 128: weiterer Verfahrensschritt
- 130: Greifhaken
- 132: Öffnung
- 134: Pin
- 136: Breite
- 138: Riegelhaken
- 140: oberer Greifhaken
- 142: unterer Greifhaken
- 144: flexibler Bereich
- 146: Verriegelungselement
- 148: Entriegelungselement
- 150: Krafteinwirkungsfläche

## Patentansprüche

1. Steckbuchse (10a), insbesondere Single-Pair-Ethernet-Steckbuchse, mit einer Steckbuchseneinheit (12a), welche an einer Vorderseite (14a) zumindest eine Steckeröffnung (16a) zur Aufnahme einer korrespondierenden Steckereinheit (18a) entlang einer Steckrichtung (20a) aufweist, **gekennzeichnet durch** eine Lichtwellenleitereinheit (22a) mit zumindest einem Lichtwellenleiter (24a), welcher sich von einer Rückseite (26a) und/oder einer Unterseite (28a) der Steckbuchseneinheit (12a) zu der Vorderseite (14a) erstreckt.

2. Steckbuchse (10a) nach Anspruch 1, **dadurch gekennzeichnet, dass** die Steckbuchseinheit (12a) zumindest eine Durchgangsöffnung (30a) zur Aufnahme des Lichtwellenleiters (24a) aufweist, welche sich von der Rückseite (26a) und/oder der Unterseite (28a) zu der Vorderseite (14a) erstreckt.

3. Steckbuchse (10a) nach Anspruch 1 oder 2, **dadurch gekennzeichnet, dass** der Lichtwellenleiter (24a) zumindest ein Verbindungselement (32a) zur lösbaren Verbindung mit der Steckbuchseneinheit (12a) aufweist.

4. Steckbuchse (10a) nach den Ansprüchen 2 und 3, **dadurch gekennzeichnet, dass** das Verbindungselement (32a) als ein Rastelement (34a) ausgebildet ist, welches zu einem Verrasten mit einem, in und/oder an der Durchgangsöffnung (30a) angeordneten, Gegenrastelement der Steckbuchseneinheit (12a) vorgesehen ist.

5. Steckbuchse (10a) nach einem der vorhergehenden Ansprüche, **dadurch gekennzeichnet, dass** der Lichtwellenleiter (24a) zumindest einen Umlenkbereich (38a) zu einer Umlenkung eines optischen Signals aufweist.

6. Steckbuchse (10a) nach einem der vorhergehenden Ansprüche, **dadurch gekennzeichnet, dass** die Lichtwellenleitereinheit (22a) zumindest einen weiteren Lichtwellenleiter (40a) aufweist.

7. Steckbuchse (10a) nach Anspruch 5, **dadurch gekennzeichnet, dass** die Lichtwellenleitereinheit (22a) zumindest einen Verbindungsteg (42a) aufweist, welcher den Lichtwellenleiter (24a) mit dem weiteren Lichtwellenleiter (40a) verbindet.

8. Steckbuchse (10a) zumindest nach dem Oberbegriff des Anspruchs 1 und insbesondere nach einem der vorhergehenden Ansprüche, **gekennzeichnet durch** eine Steckbuchsenabschirmeinheit (44a), wobei die Steckbuchseneinheit (12a) eine Steckbuchsenteileinheit (46a) mit der Steckeröffnung (16a) und eine weitere Steckbuchsenteileinheit (48a) mit zumindest einer weiteren Steckeröffnung (50a) zur Aufnahme einer korrespondierenden weiteren Steckereinheit entlang einer weiteren Steckrichtung (52a) aufweist, wobei die Steckbuchsenabschirmeinheit (44a) ein Innenabschirmelement (54a) aufweist, welches zwischen der Steckbuchsenteileinheit (46a) und der weiteren Steckbuchsenteileinheit (48a) angeordnet ist.

9. Steckbuchse (10a) nach Anspruch 8, **dadurch gekennzeichnet, dass** die Steckbuchsenteileinheit (46a) einstückig mit der weiteren Steckbuchsenteileinheit (48a) ausgebildet ist.

10. Steckbuchse (10a) nach Anspruch 9, **dadurch gekennzeichnet, dass** die Steckbuchseneinheit (12a) eine Abschirmöffnung (56a) zur Aufnahme des Innenabschirmelements (54a) aufweist, welche zwischen der Steckbuchsenteileinheit (46a) und der weiteren Steckbuchsenteileinheit (48a) angeordnet ist.

11. Steckbuchse (10a) nach einem der Ansprüche 8 bis 10, **dadurch gekennzeichnet, dass** die Steckbuchsenabschirmeinheit (44a) ein Außenabschirmelement (58a) aufweist, welches eine Außenseite (60a) der Steckbuchseneinheit (12a) zumindest zu einem Großteil abdeckt.

12. Steckbuchse (10a) zumindest nach den Ansprüchen 1 und 11, **dadurch gekennzeichnet, dass** das Außenabschirmelement (58a) zumindest eine Ausnehmung (62a) zur Durchführung des Lichtwellenleiters (24a) aufweist.

13. Steckverbindersystem (64a) mit zumindest einer Steckbuchse (10a) nach einem der vorhergehenden Ansprüche und mit zumindest einem Stecker (80a), welcher die korrespondierende Steckereinheit (18a) aufweist.

14. Steckbuchsenkit (66a) zur Herstellung einer Steckbuchse zumindest nach den Ansprüchen 1 und 8, mit der Steckbuchseneinheit (12a), der Lichtwellenleitereinheit (22a) und der Steckbuchsenabschirmeinheit (44a).

15. Verfahren zur Herstellung einer Steckbuchse (10a) mit einem Steckbuchsenkit (66a) nach Anspruch 14, wobei die Steckbuchseneinheit (12a) mit der Steckbuchsenabschirmeinheit (44a) versehen wird und anschließend die Lichtwellenleitereinheit (22a) mit der Steckbuchseneinheit (12a) verbunden wird.
